# EUROPÄISCHE PATENTSCHRIFT

(11) **EP 3 722 671 B1**
(45) Veröffentlichungstag und Bekanntmachung des Hinweises auf die Patenterteilung: **06.10.2021**
(21) Anmeldenummer: 19168623.7
(22) Anmeldetag: 11.04.2019
(51) Int. Cl.: F23L 15/02, F23D 23/00, F23N 3/08

(54) **VERFAHREN ZUR KONTINUIERLICHEN BEFEUERUNG VON BRENNKAMMERN MIT WENIGSTENS DREI REGENERATIVBRENNERN**
METHOD FOR THE CONTINUOUS FIRING OF COMBUSTION CHAMBERS WITH AT LEAST THREE REGENERATIVE BURNERS
PROCÉDÉ DE CHAUFFAGE CONTINUE DE CHAMBRES DE COMBUSTION À AU MOINS TROIS BRÛLEURS DÉGÉNÉRATIFS

(43) Veröffentlichungstag der Anmeldung: 14.10.2020
(73) Patentinhaber: Hertwich Engineering GmbH, 5280 Braunau (AT)
(72) Erfinder: Berrer, Manuel, 4910 Ried im Innkreis (AT)
(74) Vertreter: Hübscher & Partner Patentanwälte GmbH

(56) Entgegenhaltungen:
- EP-A1- 1 717 210
- CN-U- 203 615 341
- US-A1- 2016 230 991

## Beschreibung

Die Erfindung bezieht sich auf ein Verfahren zur kontinuierlichen Befeuerung von Brennkammern mit wenigstens drei Regenerativbrennern, wobei sich zyklisch zunächst ein erster der Regenerativbrenner im zuluftführenden Brennbetrieb und ein zweiter der Regenerativbrenner im abluftführenden Absaugbetrieb befindet.

Aus dem Stand der Technik sind Verfahren zur Befeuerung von Brennkammern in Industrieöfen mit zwei Regenerativbrennern bekannt. Dabei wird abwechselnd der jeweilige Regenerator eines Regenerativbrenners mit dem heißen, beim Brennvorgang in der Brennkammer anfallenden und vom Regenerativbrenner abgesaugten Prozessabgas aufgeheizt, während der Regenerator des anderen Regenerativbrenners die ihm zugeführte Zuluft erwärmt und dadurch selbst abkühlt. Beim Umschaltvorgang zwischen den Regenerativbrennern werden Zu- und Abluftstrom getauscht, sodass es zu einer kurzzeitigen Unterbrechung des Verbrennungsvorganges und damit einhergehend zu einem Druckabfall bis hin zu einer Unterdruckbildung in der Brennkammer kommt. Bei einem gegenüber dem Umgebungsdruck herrschenden Unterdruck in der Brennkammer besteht die Problematik, dass zusätzliche Falschluft in die Brennkammer gesaugt wird, wodurch sich die Energieeffizienz des Ofens aufgrund der nicht durch die Abluft vorgewärmten Falschluft verringert. Zudem wird während den Umschaltvorgängen die kontrollierte Verbrennungsluftzufuhr in die Brennkammer gestoppt, sodass die sich regelmäßig bei der Verbrennung von kontaminiertem Schrott bildenden Schwelgase zufolge des dann unterstöchiometrischen Sauerstoffgehalts der Verbrennungsluft nicht vollständig und kontrolliert verbrannt werden können, was zu einer Bildung von Kohlenmonoxid führt. Ein weiterer Nachteil besteht darin, dass nach dem Umschalten zwischen zwei Regenerativbrennern ein erneuter Zündvorgang notwendig ist, wodurch die Gefahr besteht, dass die sich beim Verbrennungsvorgang bildenden Schadstoffe aufgrund der beim Zündvorgang temporär auftretenden Druckspitzen aus der Brennkammer in die Umgebung entweichen.

Darüber hinaus wirkt sich der Umschaltvorgang negativ auf die Energieeffizienz bzw. den Wirkungsgrad derartiger Vorrichtungen aus, zumal neben einem temporären Verbrennungsstopp relativ hohe Ausregelzeiten nach dem Umschalten erforderlich sind. Um vor diesem Hintergrund die Umschaltzeitpunkte bei derartigen Vorrichtungen möglichst lange hinauszuzögern, sind massive Regeneratorbauweisen mit hoher thermischer Masse erforderlich.

Aus der US 20160230991 A1 sind Verfahren und Vorrichtungen zur Befeuerung von Brennkammern mit wenigstens drei Regenerativbrennern bekannt. Das Befeuerungsverfahren erfolgt derart, dass zu jedem Zeitpunkt die Anzahl der Abgas absaugenden Regenerativbrenner höher ist als jene der Verbrennungsluft zuführenden Regenerativbrenner. Dabei werden heißgasseitig Stetigventile eingesetzt, während kaltgasseitig den jeweiligen Regeneratoren diskrete Sperrventile vorgelagert sind, die allerdings nicht zur Durchflussregelung der auftretenden Volumenströme geeignet sind. Davon abgesehen, dass die eingesetzten Stetigventile heißgasseitig angeordnet und dadurch hohen Temperaturen und damit hohem Verschleiß ausgesetzt sind, ergeben sich bei den Umschaltvorgängen Druckschwankungen, weshalb ein energieeffizienter Betrieb aufgrund der anfallenden Umschaltdauer und den hohen Ausregelzeiten nicht möglich ist. Die EP 1 717 210 A1 offenbart einen Schmelzofenbetrieb mit drei Regenerativbrennern, wobei einer der Regenerativbrenner im Wartebetrieb ist. Der im Wartebetrieb befindliche Brenner wird gewechselt.

Daneben wurden bereits Verfahren unter Verwendung von rotierenden Drehbettregeneratoren vorgeschlagen, um eine kontinuierliche Befeuerung von Industrieöfen zu ermöglichen. Nachteilig ist daran allerdings, dass die beweglichen mechanischen Teile des Regeneratorbettes solcher Drehbettregeneratoren unmittelbar sehr hohen Temperaturen von über 1000°C ausgesetzt sind, was einerseits hohe Anforderungen an die verwendeten Materialen stellt und andererseits die dauerhafte und wirksame Abdichtung zwischen dem Verbrennungsluft- und dem Abgasbereich des Regenerativbrenners erschwert.

Der Erfindung liegt somit die Aufgabe zugrunde, ein Verfahren der eingangs geschilderten Art anzugeben, bei dem das Entweichen von gesundheitsgefährdenden Prozessgasen von der Brennkammer in die unmittelbare Umgebung sowie hohe Kohlenmonoxid-Emissionen vermieden und trotz dem Einsatz kompakt dimensionierter Regeneratoren ein energieeffizienter Befeuerungsbetrieb ermöglicht wird.

Die Erfindung löst die gestellte Aufgabe dadurch, dass der Volumenstrom der Zu- oder Abluft durch den ersten oder zweiten Regenerativbrenner stetig und im Gegentakt zum Volumenstrom der Zu- oder Abluft durch den dritten Regenerativbrenner bei gleichbleibendem Brennkammerdruck solange reduziert wird, bis der erste oder zweite Regenerativbrenner strömungsfrei ist.

Durch die erfindungsgemäßen Merkmale können das Zuführen von zusätzlicher Falschluft zufolge eines Brennkammerunterdruckes sowie das Entweichen von giftigen Prozessgasen in die unmittelbare Brennkammerumgebung zufolge eines Brennkammerüberdruckes wirksam vermieden werden, weil ein einen Verbrennungsstopp sowie einen anschließend erneuten Zündvorgang nach sich ziehender Umschaltvorgang zwischen den Regenerativbrennern entfällt und somit der Brennkammerdruck keinen großen Druckschwankungen unterworfen ist. Es kann nur dann ein gleichbleibender Brennkammerdruck ermöglicht werden, wenn die Volumenströme der Zu-und Abluft zu jedem Zeitpunkt im Betriebszyklus regelbar sind. Erfindungsgemäß kann der Volumenstrom der Zu- oder Abluft des ersten Regenerativbrenners im Gegentakt zum dritten Regenerativbrenner stetig so reduziert werden, dass die Zunahme des Volumenstromes der Zu- oder Abluft des dritten Regenerativbrenners im gleichen Verhältnis wie die Volumenstromreduktion des ersten Regenerativbrenners erfolgt. Dadurch, dass während der im Gegentakt erfolgenden Volumenstromänderung der im Brenn- oder Absaugbetrieb arbeitenden ersten und dritten Regenerativbrenner der Volumenstrom des in der jeweils gegenteiligen Betriebsart arbeitenden zweiten Regenerativbrenners unverändert bleibt, kann eine kontinuierliche Zufuhr von Verbrennungsluft sowie eine kontinuierliche Absaugung von Abluft bei Aufrechterhaltung einer konstanten Gesamtdurchflussmenge sowohl des Zu- als auch des Abluftstromes erfolgen. Da somit zu jedem Zeitpunkt ein Volumenstrom der Zu- wie auch der Abluft vorhanden ist, kann der Brennkammerdruck beispielsweise über den Gesamtvolumenstrom der Abluft und / oder der Zuluft zu jedem Zeitpunkt des Betriebszyklus geregelt werden. Aufgrund des dabei vorteilhaften und schnell ansprechenden Druckregelverhaltens können die Betriebszyklen gegenüber dem Stand der Technik kürzer gewählt werden, wodurch die eingesetzten Regeneratoren der Regenerativbrenner eine geringere thermische Masse aufweisen und kompakter gebaut werden können. In diesem Zusammenhang ergeben sich günstige Betriebsbedingungen, wenn das Brennkammerdruckniveau nahe am Umgebungsdruck angesiedelt ist. Unter Zuluft wird im Sinne der Erfindung die der Brennkammer kontrolliert zugeführte Frisch- bzw. Umgebungsluft verstanden, während unter Abluft das Abgas, also das beim Verbrennungsvorgang entstehende Gas-Luftgemisch mitsamt Luftstickstoff und Restsauerstoff verstanden wird.

Es wird auch eine Vorrichtung mit wenigstens drei Regenerativbrennern, deren Regeneratoren heißgasseitig mit der Brennkammer strömungsverbunden und jeweils über ein kaltgasseitiges Ventil wechselweise mit einer Zu- und einer Abluftleitung verbindbar sind, zur Durchführung eines erfindungsgemäßen Verfahrens beschrieben. Um in diesem Zusammenhang ein gutes Regelverhalten des Brennkammerdruckes zu ermöglichen und den thermisch bedingten Verschleiß von Stellelementen zur kontinuierlichen Durchflussregelung von Volumenströmen der Zu- und Abluft zu vermindern, wird vorgeschlagen, dass die kaltgasseitigen Ventile als Stetigventile ausgebildet sind, von denen wenigstens zwei unter Ausbildung eines geschlossenen Brennkammerdruckregelkreises im Gegentakt ansteuerbar sind. Zufolge dieser Merkmale wird vermieden, dass die beweglichen mechanischen Teile der als Stellelemente fungierenden Stetigventile, die beispielsweise als Regelklappen ausgebildet sein können, mit der heißen Abluft der Brennkammer in Berührung kommen, weil sichergestellt ist, dass die Abluft ihre Wärme an den dem Stellventil heißgasseitig vorgelagerten Regenerator abgibt, bevor die bereits gekühlte Abluft auf das Stetigventil trifft. Unter einem Stetigventil kann im Allgemeinen aber jedes ansteuerbare Ventil verstanden werden, dass einen stetigen Übergang seiner Schaltstellungen zur Durchflussregelung erlaubt. Der geschlossene Brennkammerdruckregelkreis ermöglicht eine effiziente Regelung des Brennkammerdruckes über den Gesamtvolumenstrom der Ab- und / oder Zuluft mittels der im Gegentakt ansteuerbaren Stetigventile. Beispielsweise kann jeder Regenerator über ein kaltgasseitiges Stetigventil jeweils mit der Zu- und der Abluftleitung absperrbar strömungsverbunden sein.

Zu Beginn eines Betriebszyklus befindet sich der erste der Regenerativbrenner beispielsweise zunächst im Abluft führenden Absaugbetrieb, der zweite der Regenerativbrenner im Zuluft führenden Brennbetrieb und der dritte der Regenerativbrenner im strömungsfreien Ruhebetrieb. Die jeweiligen kaltgasseitigen Stetigventile des ersten und des dritten Regenerativbrenners werden im Gegentakt so angesteuert, dass der Abluftvolumenstrom des ersten Regenerativbrenners stetig im selben Verhältnis zufolge der kontinuierlichen Schließbewegung von dessen kaltgasseitigen Stetigventil abnimmt, wie der Abluftvolumenstrom des zuvor strömungsfreien dritten Regenerativbrenners zufolge der kontinuierlichen Öffnungsbewegung von dessen kaltgasseitigen Stetigventil zunimmt, während die Stellung des kaltgasseitigen Stetigventils des zweiten Regenerativbrenners nicht verändert werden muss und somit dessen Zuluftvolumenstrom unverändert bleibt. Der Betriebszyklus kann weitergeführt werden, indem beispielsweise der Zuluftvolumenstrom des im Brennbetrieb arbeitenden zweiten Regenerativbrenners in analoger Weise zum vorhergehenden Abluftvolumenstromtausch zwischen ersten und dritten Regenerativbrenner stetig in den Zuluftvolumenstrom des zwischenzeitlich strömungsfreien ersten Regenerativbrenners überführt wird, während der Abluftvolumenstrom des dritten Regenerativbrenners unverändert bleibt.

Um bei günstigen Betriebsbedingungen einen verschleißarmen Betrieb und somit längere Wartungsintervalle der Vorrichtung zu ermöglichen, können die kaltgasseitigen Stetigventile über je einen Sperrschieber mit der Zu- und der Abluftleitung strömungsverbunden sein. Der Einsatz von im Gegensatz zu Stetigventilen robusten Sperrschiebern als diskrete Ein-/Aus-Ventile erlaubt es, bei einer Vorrichtung mit beispielsweise drei Regernativbrennern, anstatt wenigstens sechs Stetigventilen lediglich drei Stetigventile zur Durchflussregelung vorsehen zu müssen, während die wechselweise Verbindung der jeweiligen Regeneratoren mit der Zu- bzw. der Ablufleitung dann durch die Sperrschieber erfolgen kann.

Besonders vorteilhafte konstruktive sowie regeltechnische Bedingungen ergeben sich, wenn die Zu- und/oder Abluftleitung ein Summenstetigventil zur Volumenstromregelung des Gesamtluftstromes aufweist. Dies ermöglicht eine Regelung des Brennkammerdruckes über je ein einziges globales Summenstetigventil, das der Zu- und / oder Abluftleitung zugeordnet ist. Das beispielsweise als zusätzliche Regelklappe ausgebildete Summenstetigventil kann einer Zuluft- und / oder einer Abluftvorrichtung in Richtung der Regnerativbrenner nachgelagert sein.

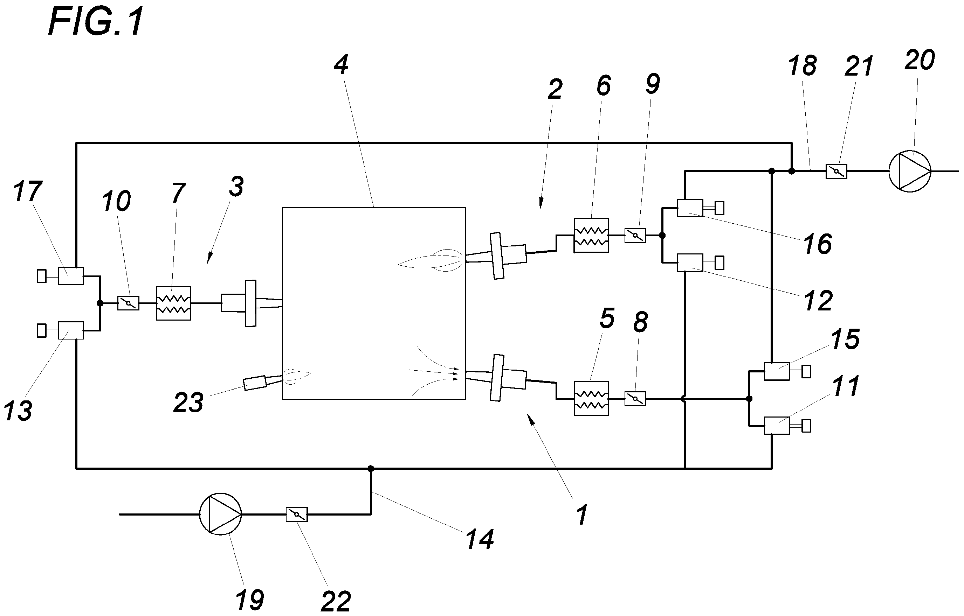

In der Zeichnung ist der Erfindungsgegenstand beispielsweise dargestellt. Es zeigen
- Fig. 1: ein schematisches Schaltbild einer erfindungsgemäßen Vorrichtung und
- Fig. 2: den zeitlichen Gesamtvolumenstromverlauf, den zeitlichen Verlauf der Teilvolumenströme sowie den zeitlichen Gesamtdruckverlauf einer Brennkammer einer erfindungsgemäßen Vorrichtung für einen Betriebszyklusabschnitt eines erfindungsgemäßen Verfahrens.

Eine erfindungsgemäße Vorrichtung weist drei Regenerativbrenner 1, 2, 3 zur Befeuerung einer Brennkammer 4 auf. Die Regenerativbrenner 1, 2, 3 weisen jeweils heißgasseitig mit der Brennkammer 4 strömungsverbundene Regeneratoren 5, 6, 7 auf. Den Regeneratoren 5, 6, 7 sind jeweils kaltgasseitig in Richtung Brennkammer 4 als Regelklappen ausgebildete Stetigventile 8, 9, 10 vorgelagert, die über je einen Sperrschieber 11, 12, 13 mit einer Zuluftleitung 14 und über je einen Sperrschieber 15, 16, 17 mit einer Abluftleitung 18 strömungsverbunden sind.

Die Zufuhr von Verbrennungsluft, die für den Brennbetrieb über die Zuluftleitung 14 zu den Regeneratoren 5, 6, 7 geleitet und von diesen erwärmt werden kann, erfolgt über eine Zulufteinrichtung 19. Die Absaugung der Abluft erfolgt über eine Ablufteinrichtung 20.

Die Stetigventile 8, 9, 10 sind jeweils unter Ausbildung eines geschlossenen Regelkreises zur Druckregelung der Brennkammer 4 paarweise im Gegentakt ansteuerbar. Der Druck der Brennkammer 4 wird beispielsweise mittels eines der Ablufteinrichtung 20 in Richtung der Brennkammer 4 nachgelagerten, beispielsweise als Regelklappe ausgebildeten Summenstetigventils 21 geregelt. Für ein besseres Regelverhalten kann auch ein in Richtung der Brennkammer 4 nachgelagertes Summenstetigventil 22 zusätzlich eingesetzt werden. Um beim erstmaligen Hochfahren die Brennkammer 4 kontrolliert auf die Zündtemperatur des Brenngases von ca. 750°C zu erhitzen, bevor die Regenerativbrenner 1, 2, 3 eingeschaltet werden kann ein zusätzlicher, in die Brennkammer 4 mündender und beispielsweise als Kaltluftbrenner ausgebildeter Hilfsbrenner 23 vorgesehen sein.

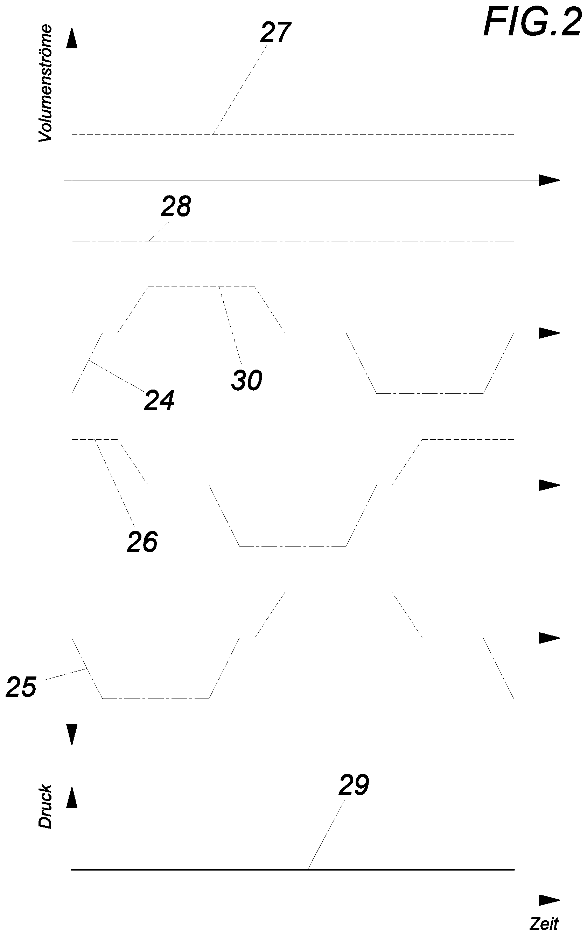

In Fig. 2 werden die zeitlichen Volumenstromverläufe der Regenerativbrenner 1, 2, 3 sowie der zeitliche Brennkammerdruckverlauf einer erfindungsgemäßen Vorrichtung während eines Betriebszyklusabschnittes eines erfindungsgemäßen Verfahrens beispielhaft dargestellt.

Beispielsweise arbeitet der Regenerativbrenner 1 zunächst im Abluft führenden Absaugbetrieb, der Regenerativbrenner 2 im Zuluft führenden Brennbetrieb und der der Regenerativbrenner 3 im strömungsfreien Ruhebetrieb. Die jeweiligen kaltgasseitigen Stetigventile 8, 10 der Regenerativbrenner 1, 3 werden im Gegentakt so angesteuert, dass der Abluftvolumenstrom 24 des Regenerativbrenners 1 stetig im selben Verhältnis zufolge der kontinuierlichen Schließbewegung des Stetigventils 8 abnimmt, wie der Abluftvolumenstrom 25 des zuvor strömungsfreien Regenerativbrenners 3 zufolge der kontinuierlichen Öffnungsbewegung des Stetigventils 10 zunimmt, während das Stetigventil 9 nicht angesteuert wird und somit der Zuluftvolumenstrom 26 des Regenerativbrenners 2 bzw. damit auch der Gesamzuluftstrom 27 unverändert bleibt. Das Stetigventil 10 ist danach so geöffnet, dass der Abluftvolumenstrom 25 das vorhergehende Niveau des Abluftvolumenstromes 24 unter Beibehaltung eines konstanten Gesamtabluftstromes 28 sowie eines konstanten Brennkammerdruckes 28 erreicht hat, während das Stetigventil 8 geschlossen und somit der Abluftvolumenstrom 23 stillgelegt ist. Der Gesamtabluftstrom 28 kann während des gesamten Betriebszyklus höher sein als der Gesamtzuluftstrom 27.

Um den Betriebszyklus weiterzuführen, kann zunächst die Verbindung des nun strömungsfreien Regenerativbrenners 1 zur Abluftleitung 18 über den Sperrschieber 15 geschlossen und die Verbindung zur Zuluftleitung 14 über den Sperrschieber 11 geöffnet werden. Im nächsten Schritt kann der im Brennbetrieb arbeitende Regenerativbrenner 2 in analoger Weise zum vorhergehenden Abluftvolumenstromtausch zwischen den Regenerativbrennern 1, 3 mittels der Stetigventile 8, 9 stetig in den Zuluftvolumenstrom 30 des Regenerativbrenners 1 überführt werden, während der Abluftvolumenstrom 25 des Regenerativbrenners 3 unverändert bleibt. Die weiteren Schritte des in Fig. 2 beispielhaft dargestellten Betriebszyklusabschnittes können in analoger Weise fortgeführt werden.

## Patentansprüche

1. Verfahren zur kontinuierlichen Befeuerung von Brennkammern (4) mit wenigstens drei Regenerativbrennern (1, 2, 3), wobei sich zyklisch zunächst ein erster der Regenerativbrenner (1, 2, 3) im zuluftführenden Brennbetrieb und ein zweiter der Regenerativbrenner (1, 2, 3) im abluftführenden Absaugbetrieb befindet, **dadurch gekennzeichnet, dass** der Volumenstrom (24, 26) der Zu- oder Abluft durch den ersten oder zweiten Regenerativbrenner stetig und im Gegentakt zum Volumenstrom (25) der Zu- oder Abluft durch den dritten Regenerativbrenner bei gleichbleibendem Brennkammerdruck solange reduziert wird, bis der erste oder zweite Regenerativbrenner strömungsfrei ist.

2. Vorrichtung zur Durchführung eines Verfahrens nach Anspruch 1 mit wenigstens drei Regenerativbrennern (1, 2, 3), deren Regeneratoren (5, 6, 7) heißgasseitig mit der Brennkammer (4) strömungsverbunden und jeweils über ein kaltgasseitiges Ventil (8, 9, 10) wechselweise mit einer Zuluftleitung (14) und einer Abluftleitung (18) verbindbar sind, **dadurch gekennzeichnet, dass** die kaltgasseitigen Ventile (8, 9, 10) als Stetigventile ausgebildet sind, von denen wenigstens zwei unter Ausbildung eines geschlossenen Brennkammerdruckregelkreises im Gegentakt ansteuerbar sind.

3. Vorrichtung nach Anspruch 2, **dadurch gekennzeichnet, dass** die kaltgasseitigen Stetigventile (8, 9, 10) über je einen Sperrschieber (11, 12, 13, 15, 16, 17), mit der Zuluftleitung (14) und der Abluftleitung (18) strömungsverbunden sind.

4. Vorrichtung nach Anspruch 2 oder 3, **dadurch gekennzeichnet, dass** die Zuluftleitung (14) und/oder die Abluftleitung (18) ein Summenstetigventil (21, 22) zur Volumenstromregelung des Gesamtluftstromes aufweisen.

## Claims

1. Method for the continuous firing of combustion chambers (4) having at least three regenerative burners (1, 2, 3), wherein cyclically initially a first one of the regenerative burners (1, 2, 3) is in combustion operation, carrying supply air, and a second one of the regenerative burners (1, 2, 3) is in exhaust operation, carrying exhaust air, **characterised in that** the volume flow (24, 26) of the supply or exhaust air through the first or second regenerative burner is reduced continuously and in counter-cycle to the volume flow (25) of the supply or exhaust air through the third regenerative burner at a constant combustion chamber pressure until the first or second regenerative burner has no flow through it.

2. Device for performing a method as claimed in claim 1 having at least three regenerative burners (1, 2, 3), the regenerators (5, 6, 7) of which being flow-connected on the hot gas-side to the combustion chamber (4) and each being able to be connected via a cold gas-side valve (8, 9, 10) alternatingly to a supply air line (14) and an exhaust air line (18), **characterised in that** the cold gas-side valves (8, 9, 10) are formed as proportional valves, at least two of which can be actuated in counter-cycle forming a closed combustion chamber pressure regulating circuit.

3. Device as claimed in claim 2, **characterised in that** the cold gas-side proportional valves (8, 9, 10) are flow-connected to the supply air line (14) and the exhaust air line (18) in each case via a gate valve (11, 12, 13, 15, 16, 17).

4. Device as claimed in claim 2 or 3, **characterised in that** the supply air line (14) and/or the exhaust air line (18) have a summation proportional valve (21, 22) for regulating the volume flow of the total air flow.

## Revendications

1. Procédé pour l'allumage continu de chambres de combustion (4) avec au moins trois brûleurs régénératifs (1, 2, 3), selon lequel, de façon cyclique, dans un premier temps, un premier des brûleurs régénératifs (1, 2, 3) se trouve dans mode de combustion dans lequel il conduit l'air entrant et un deuxième des brûleurs régénératifs (1, 2, 3) dans un mode d'évacuation dans lequel il conduit l'air sortant, **caractérisé en ce que** le débit volumique (24, 26) de l'air entrant ou sortant traversant le premier ou le deuxième brûleur régénératif est réduit de façon continue et à contre-sens du débit volumique (25) de l'air entrant ou sortant traversant le troisième brûleur régénératif, avec une pression constante dans les chambres de combustion, jusqu'à ce qu'il n'y ait plus de flux dans le premier ou le deuxième brûleur régénératif.

2. Dispositif pour exécuter un procédé selon la revendication 1 avec au moins trois brûleurs régénératifs (1, 2, 3) dont les régénérateurs (5, 6, 7) sont reliés en communication fluide du côté du gaz chaud avec la chambre de combustion (4) et peuvent être reliés chacun par une vanne située du côté du gaz froid (8, 9, 10) alternativement avec une conduite d'entrée d'air (14) et une conduite de sortie d'air (18), **caractérisé en ce que** les vannes situées du côté du gaz froid (8, 9, 10) sont configurées comme des vannes continues dont au moins deux peuvent être commandées en opposition, formant un circuit fermé de régulation de pression de chambre de combustion.

3. Dispositif selon la revendication 2, **caractérisé en ce que** les vannes continues situées du côté du gaz froid (8, 9, 10) sont reliées en communication fluide, chacune par un coulisseau de blocage (11, 12, 13, 15, 16, 17), avec la conduite d'entrée d'air (14) et la conduite de sortie d'air (18).

4. Dispositif selon la revendication 2 ou 3, **caractérisé en ce que** la conduite d'entrée d'air (14) et/ou la conduite de sortie d'air (18) présentent une vanne continue collectrice (21, 22) pour le réglage du débit volumique du flux d'air total.
